# EUROPÄISCHE PATENTSCHRIFT

(11) **EP 2 042 354 B1**
(45) Veröffentlichungstag und Bekanntmachung des Hinweises auf die Patenterteilung: **31.03.2010**
(21) Anmeldenummer: 08013220.2
(22) Anmeldetag: 23.07.2008
(51) Int. Cl.: B60G 7/00, B62D 17/00

(54) **Verstelleinheit für eine verstellbare Radaufhängung eines Kraftfahrzeugs**
Position adjustment unit for an adjustable wheel suspension in a motor vehicle
Unité de réglage de position pour une suspension de roue réglable d'un véhicule automobile

(30) Priorität: 29.09.2007 DE 102007046833
(43) Veröffentlichungstag der Anmeldung: 01.04.2009
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 1 795 384
- WO-A-2005/080826
- WO-A-2008/052531
- DE-A1- 3 629 881
- FR-A- 2 884 795

## Beschreibung

Die Erfindung betrifft eine Verstelleinheit für eine verstellbare Radaufhängung eines Kraftfahrzeugs gemäß dem Oberbegriff des Patentanspruches 1.

Hinsichtlich der Ausbildung einer aktiven Hinterachslenkung eines Kraftfahrzeugs gibt es verschiedene technische Lösungsansätze. Es sind sowohl elektromechanische als auch hydraulische Systeme im Einsatz. Um das Rad zu bewegen, wird entweder die Länge eines Lenkers verändert, oder ein Lenkerfußpunkt des Lenkers ist verstellbar ausgebildet. Nachfolgend wird lediglich eine Radaufhängung mit einem verstellbaren Lenkerfußpunkt näher betrachtet, da diese technische Ausgestaltung funktionell und strukturell die meisten Gemeinsamkeiten mit der Radaufhängung gemäß dem Patentanspruch 1 aufweist.

Eine gattungsgemäße Verstelleinheit für eine verstellbare Radaufhängung eines Kraftfahrzeugs mit einem verstellbar ausgebildeten Lenkerfußpunkt zur Einstellung der Spur der Hinterräder ist beispielsweise in der DE 36 29 881 A1 offenbart. Hierbei ist ein Lagerbolzen mit angebauten Exzentern relativ zu einer die Lenkerlagerung aufnehmenden Lagerkonsole verdrehbar, so dass die wirksame Lenkerlage entsprechend veränderbar ist. Die Verdrehung des Lagerbolzens mit den Exzentern kann u. a. mittels eines angeschlossenen Hebels oder über einen Stellmotor mit Schneckentrieb erfolgen. Eine derartige Exzenterverstellung - die auch zur Verstellung des Sturzes, der Vorspur, der Spreizung, des Nachlaufes etc. der Radaufhängung dienen und an einem entsprechenden Lenker angeordnet sein kann - ist funktionssicher und robust, bewirkt aber neben der Verschiebung des Lenkers auch einen Höhenversatz des zu verstellenden Lenkerlagers, was bei Radaufhängungen bzw. bei diversen verstellbaren Lenkern nachteilig sein kann, z. B. im Hinblick auf eine Veränderung der Momentanzentrumshöhe und/oder der kinematischen Eigenschaften der Radaufhängung, so dass eine derartige Anordnung bei der Abtriebsbewegung zu einer unerwünschten Taumelbewegung führt.

Eine weitere, gattungsgemäße, sämtliche Merkmale des Oberbegriffs des Anspruches 1 aufweisende Verstelleinheit für eine verstellbare Radaufhängung eines Kraftfahrzeugs, ist aus der nachveröffentlichen WO 2008/052531 A1 bekannt.

Der Erfindung liegt die Aufgabe zugrunde, eine Verstelleinheit für eine verstellbare Radaufhängung eines Kraftfahrzeugs gemäß der im Oberbegriff des Anspruches 1 angegebenen Art unter Vermeidung der genannten Nachteile derart weiter zu bilden, dass bei einer Verstellung des Lenkerlagerpunktes das Momentanzentrum in seiner Höhenlage nahezu unverändert verbleibt.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Nach der Erfindung umfasst die Verstelleinheit für eine verstellbare Radaufhängung mindestens einen Lenker, der mittels eines Lenkerlagerpunktes an einem fahrzeugfesten Hilfsrahmen festgelegt ist, wobei der Lenkerlagerpunkt verschiebbar ausgebildet ist. Erfindungsgemäß ist vorgesehen, dass der Lenkerlagerpunkt in Wirkverbindung mit einem am Hilfsrahmen gelagerten, eine Geradführung nach dem Prinzip der Kreisrollung ausführenden Koppelsystems steht und dass das Koppelsystem seinerseits mit einem Aktuator in Wirkverbindung steht, so dass bei einer durch den Aktuator initiierten Bewegung des Koppelsystems der Lenkerlagerpunkt entlang eines vorgegebenen Verstellweges linear verschiebbar ist.

Erfindungsgemäß ist der Aktuator oberhalb des Lenkers angeordnet und pendelnd am Hilfsrahmen gelagert. Dies hat den Effekt, dass keine zusätzlichen ungefederten Massen auf den Lenker wirken, da der Aktuator aufgrund der Aufhängung am Hilfsrahmen an der Federbewegung nicht teilnimmt. Ein weiterer Vorteil liegt darin, dass hierdurch eine platzsparende Montage ermöglicht ist.

In vorteilhafter Weise ist durch die erfindungsgemäßen Merkmale sichergestellt, dass die Verstellung des Lenkerlagerpunktes in einer horizontalen Ebene erfolgt, d. h. eine Verschiebung des Momentanzentrums in seiner Höhenlage findet nahezu nicht statt.

Weitere Vorteile der erfindungsgemäßen Ausbildung sind, dass der Originallenker unverändert übernommen werden, da die Verstellung keinen Einfluss auf die Lenkerform hat, d. h. die erfindungsgemäße Verstelleinheit ist an vorhandene Radaufhängungen einfach adaptierbar. Ausgehend von der Grundausführung kann somit durch ein bloßes Hinzufügen der erfindungsgemäßen Verstelleinheit das Fahrzeug auf aktive Kinematik aufgerüstet werden.

Vorteilhaft ist zudem, dass der Lenker federbelastet und gekröpft ausgebildet sein kann.

Vorzugsweise umfasst das Koppelsystem mindestens zwei kreuzförmig zueinander angeordnete, jeweils erste und zweite Endbereiche aufweisende Koppelarme, deren erste Endbereiche jeweils drehbar am Hilfsrahmen gelagert sind und deren zweite Endbereiche jeweils über eine mit dem Lenkerlagerpunkt in Wirkverbindung stehenden Strebe gelenkig miteinander verbunden sind. Durch die kreuzförmige Anordnung des Koppelsystems sowie hinsichtlich der Toleranzen eng ausgelegten Passungen entsteht in vorteilhafter Weise ein äußerst steifes, formstabiles Aufhängungsgebilde. Es könnten sogar Kräfte quer zur Lenkerlängsachse aufgenommen werden, was jedoch in der Regel bei einem Lenker mit nur zwei Lagern so gut wie nicht vorkommt.

Vorzugsweise weist der Aktuator an seinem, dem Koppelsystem zugewandten Endbereich einen gabelförmigen Abschnitt auf und der Aktuator steht über diesen gabeförmigen Abschnitt mit dem Koppelsystem in Wirkverbindung.

Vorzugsweise ist der Lenker als ein in etwa in Längsrichtung des Lenkers wirkender Linearsteller ausgebildet. In vorteilhafte Weise ist hierdurch eine extrem schnelle und präzise Lenkerverstellung ermöglicht.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden an Hand des in den Zeichnungen dargestellten Ausführungsbeispiels näher beschrieben.

In der Beschreibung, in den Ansprüchen und in der Zeichnung werden die in der unten angeführten Liste der Bezugszeichen verwendeten Begriffe und zugeordneten Bezugszeichen verwendet. In der Zeichnung bedeuten:
- Fig. 1: eine Hinterachse eines Kraftfahrzeugs in der Rückansicht mit einer erfindungsgemäß ausgebildeten Verstelleinheit;
- Fig. 2: die Hinterachse aus Fig. 1 in einer Schnittdarstellung durch die Mitte Lenker/Aktuator;
- Fig. 3: Schnitt A-A von Fig. 2;
- Fig. 4: die Verstelleinheit aus Fig. 1 und 2 in Schrägansicht, ohne Hilfsrahmen;
- Fig. 5: die Verstelleinheit aus Fig. 1 und 2 in einer weiteren Schrägansicht, ohne Hilfsrahmen;
- Fig. 6: die Verstelleinheit aus Fig. 1 und 2 in einer weiteren Schrägansicht, ohne Hilfsrahmen;
- Fig. 7: die Verstelleinheit aus Fig. 1 und 2 in Schrägansicht mit Längsschnitt, ohne Hilfsrahmen;
- Fig. 8: eine Prinzipskizze der Geradführung in der Neutralstellung;
- Fig. 9: die Geradführung aus Fig. 8 in einer Verstelllageverschiebung nach rechts und
- Fig. 10: die Geradführung aus Fig. 8 in einer Verstelllageverschiebung nach links.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

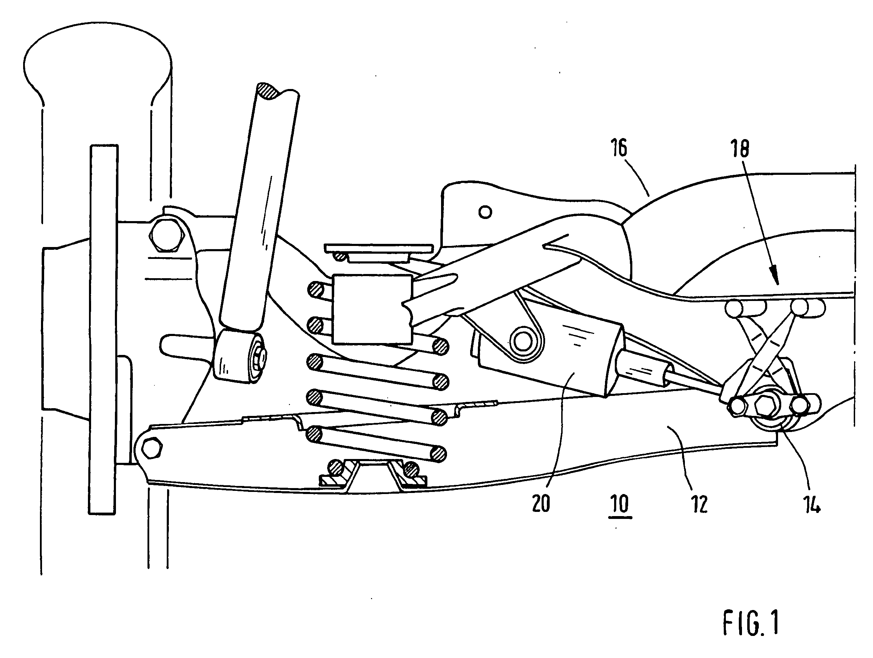

Fig. 1 zeigt in einer Rückansicht eine Hinterachse eines Kraftfahrzeugs mit einer insgesamt mit der Bezugsziffer 10 bezeichneten Verstelleinheit.

Als wesentliche Merkmale weist die Verstelleinheit 10 einen Lenker 12 auf, der mittels eines Lenkerlagerpunktes 14 an einem Hilfsrahmen 16 festgelegt ist. Der Lenkerlagerpunkt 14 ist dabei über Koppelsystem 18, welches eine Geradführung nach dem Prinzip der Kreisrollung erfüllt, am Hilfsrahmen 16 aufgehangen. Das Koppelsystem 18 seinerseits steht mit einem, pendelt am Hilfsrahmen 16 gelagerten, Aktuator 20 in Wirkverbindung, sodass bei einer durch den Aktuator 20 initiierten Bewegung des Koppelsystems 18 der Lenkerlagerpunkt 14 linear verschiebbar ist.

Aufgrund der Verstellung des Lenkerlagerpunktes 14 über das eine Geradführung nach dem Prinzip der Kreisrollung ausführenden Koppelsystems 18 erfolgt die Verschiebung des Lenkerlagerpunktes 14 lediglich in einer horizontalen Ebene, d.h. die Änderung der Momentanzentrumshöhe bei dem Verstellvorgang ist vernachlässigbar, annähernd Null.

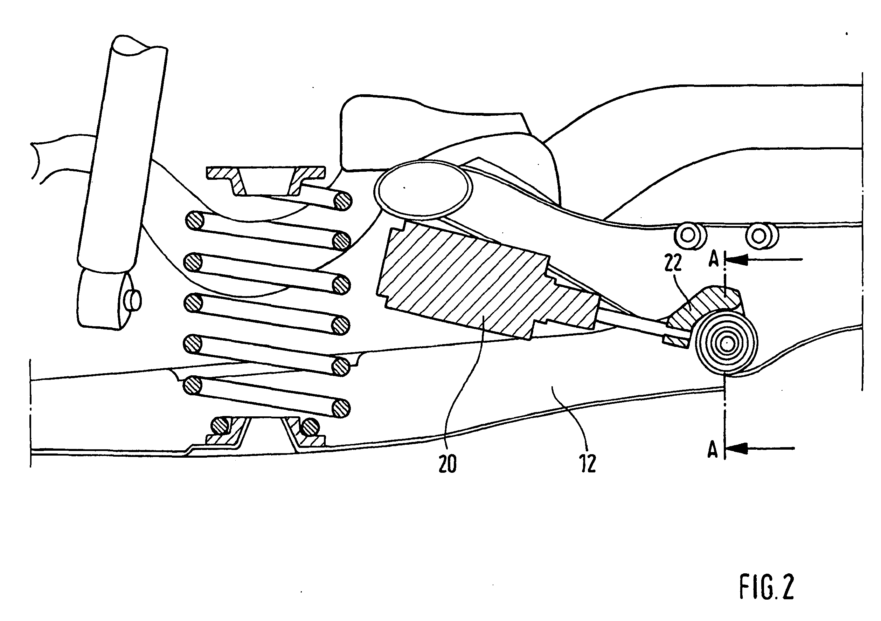

Der Aktuator 20 ist vorliegend als ein in Längsrichtung des Lenkers 12 wirkender Linearsteller, beispielsweise mit einem Kugelgewindetrieb, ausgebildet. Wie insbesondere Fig. 2 zu entnehmen ist, weist der Aktuator 20 an seinem dem Koppelsystem 18 zugewandten Endbereich einen gabelförmigen Abschnitt 22, über den der Aktuator 20 mit dem Koppelsystem 18 in Wirkverbindung steht.

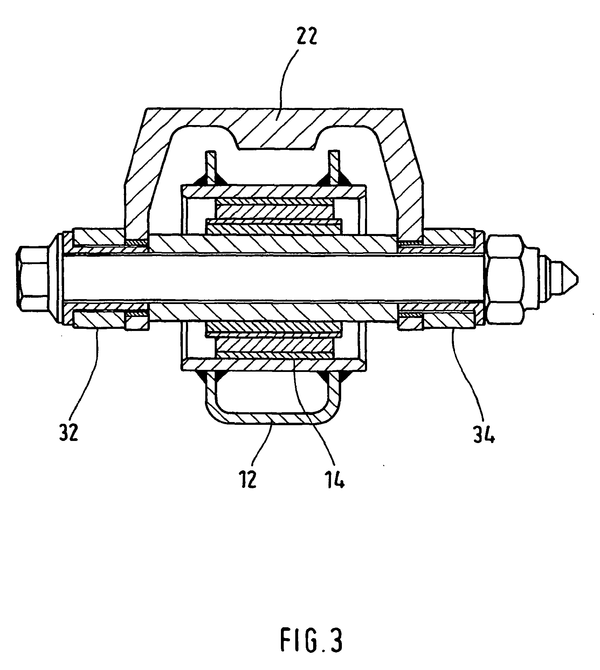

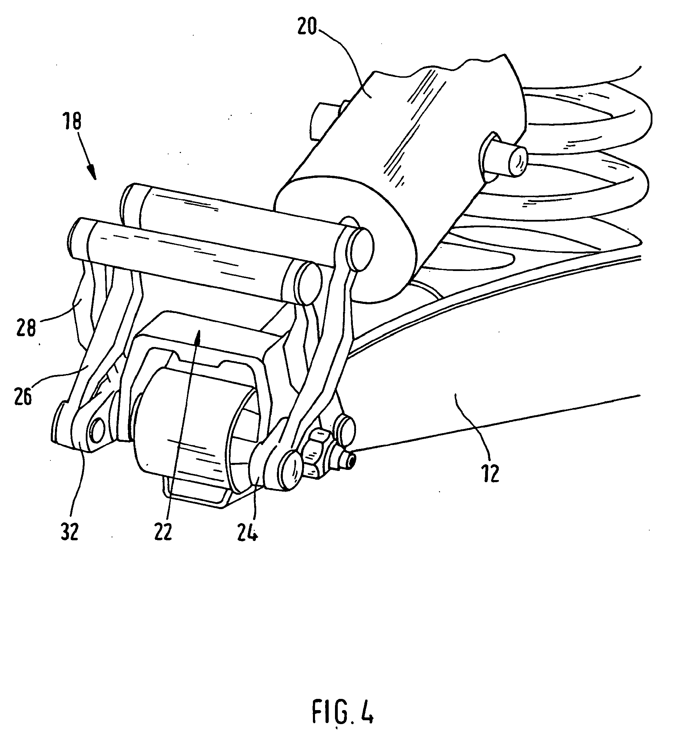

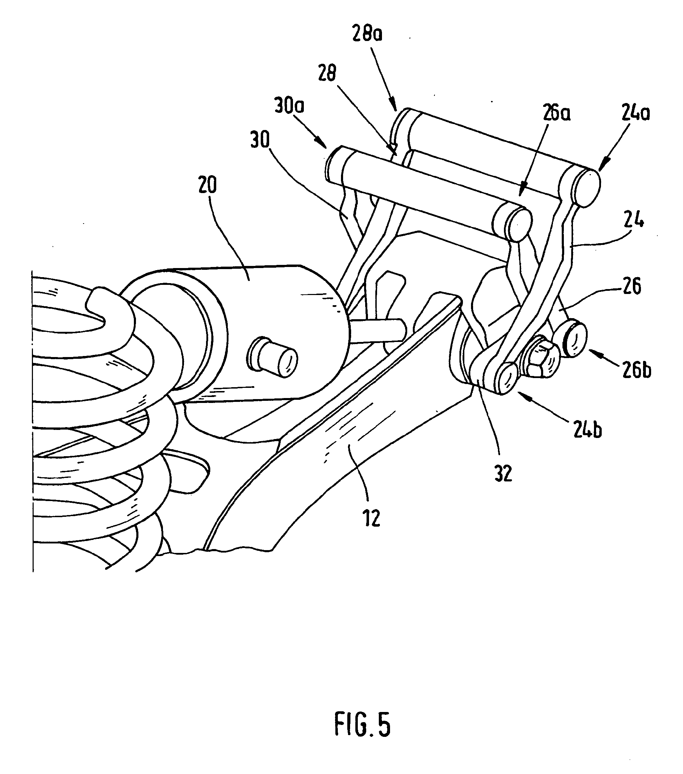

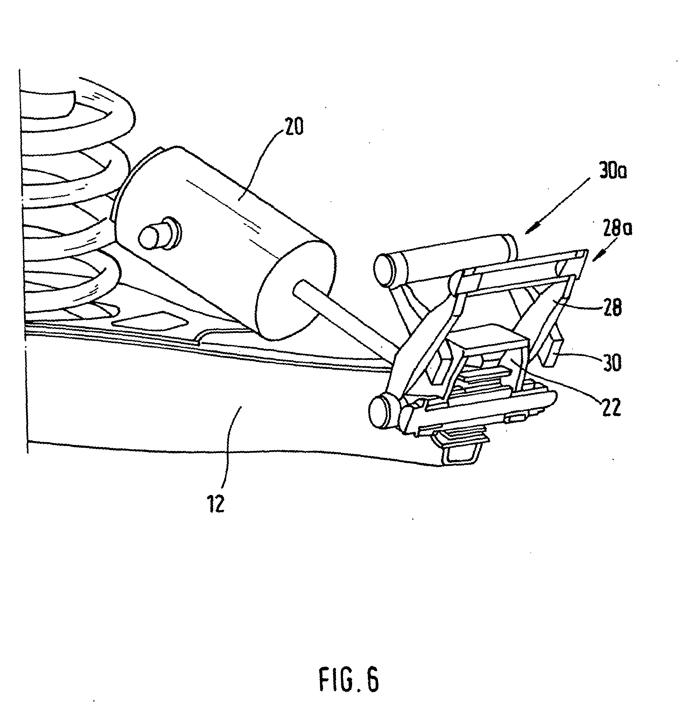

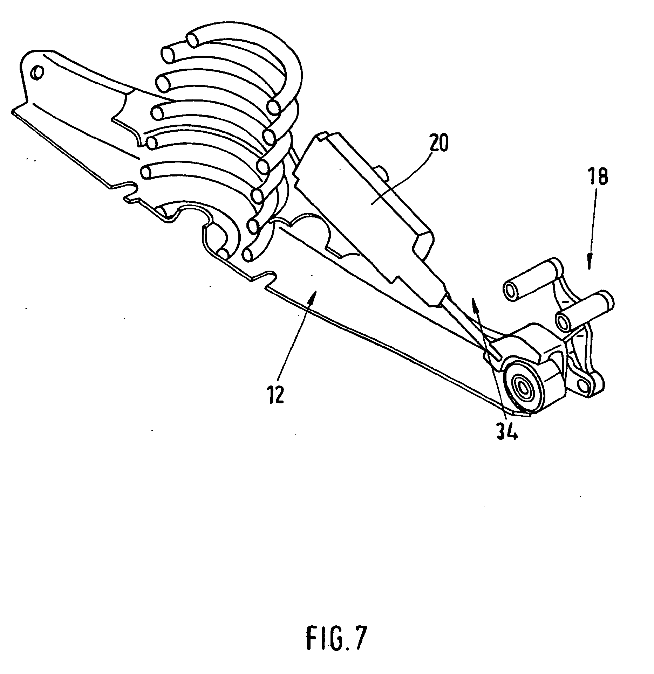

Der Aufbau des Koppelsystems 18 ist in den Fig. 3 bis 7 dargestellt: Das eine Geradführung nach dem Prinzip der Kreisrollung ausführenden Koppelsystem 18 umfasst hierzu zwei vordere Koppelarme 24, 26 und zwei hintere Koppelarme 28, 30. Der Traglenker 12 ist im Zwischenraum zwischen den kreuzweise zueinander angeordneten, vorderen Koppelarmen 24, 26 und den kreuzweise zueinander angeordneten hinteren Koppelarmen 28, 30 gelagert.

Über erste Endbereiche 24a, 26a bzw. 28a, 30a sind die vorderen Koppelarme 24, 26 bzw. die hinteren Koppelarme 28, 30 jeweils drehbar am Hilfsrahmen 16 gelagert. Über eine vordere Strebe 32 sind die zweiten Endbereiche 24b, 26b der vorderen Koppelarmen 24, 26 gelenkig miteinander verbunden. Entsprechend sind auch die zweiten Endbereiche 28b 30b der hinteren Koppelarme 28, 30 mittels einer hinteren Strebe 34 gelenkig miteinander verbunden.

Die Streben 32, 34 stehen wiederum in Wirkverbindung mit dem Lenkerlagerpunkt 14 und dem gabelförmigen Abschnitt 22 des Aktuators 20.

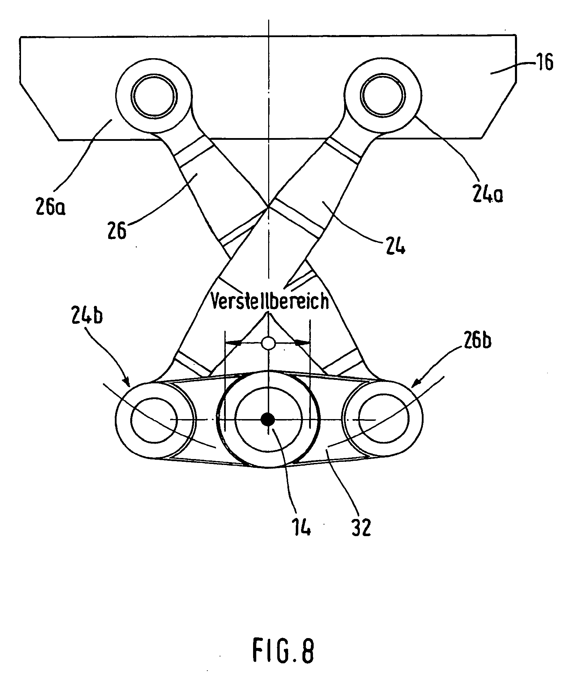

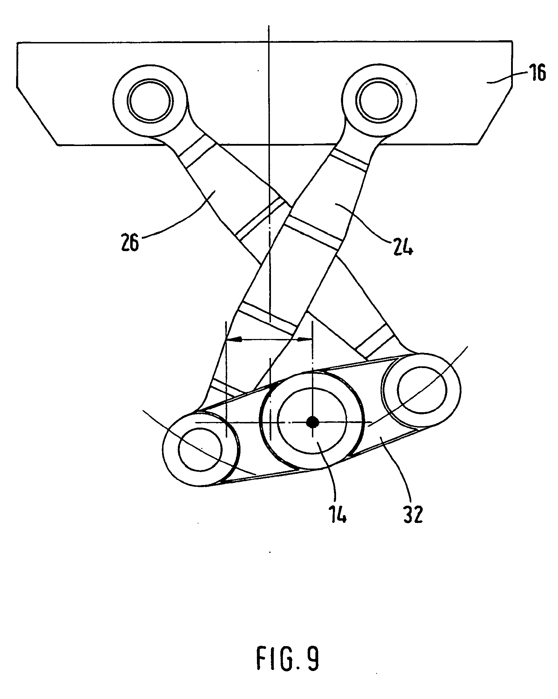

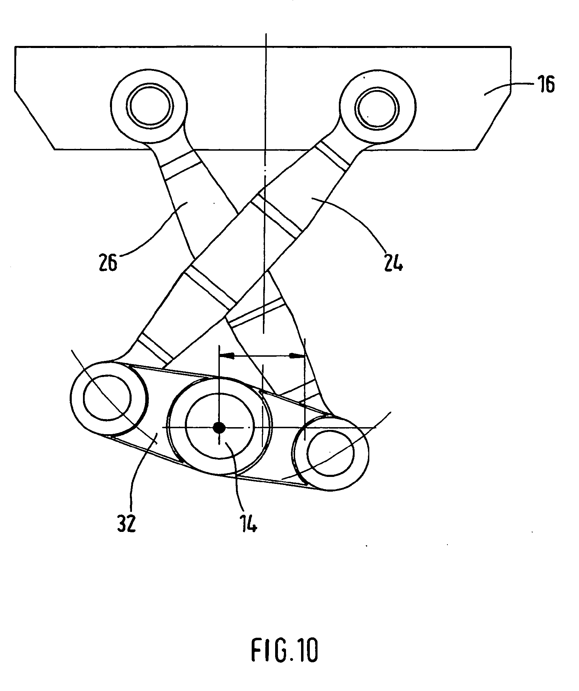

Die Funktion des Koppelsystems 18 ist schematisch in den Fig. 8 bis 10 dargestellt. Während Fig. 8 das Koppelsystem 18 in einer Mittelage zeigt, zeigen Fig. 9 und 10 das Koppelsystem im ausgelenkten Zustand, nämlich Auslenkung nach rechts, Fig. 9, bzw. Auslenkung nach links, Fig. 10.

Wie den Fig. 8 bis 10 deutlich zu entnehmen ist, führt der Lenkerlagerpunkt 14 bei einer Auslenkung des Systems lediglich eine horizontale Verschiebung aus, d.h. eine Störung der Momentanzentrumshöhe findet nahezu nicht statt.

### BEZUGSZEICHENLISTE

- 10: Verstelleinheit
- 12: Lenker
- 14: Lenkerlagerpunkt
- 16: Hilfsrahmen
- 18: Koppelsystem
- 20: Aktuator
- 22: gabelförmiger Abschnitt des Aktuators
- 24: erster vorderer Koppelarm
- 24a: erster Endbereich des ersten vorderen Koppelarms
- 24b: zweiter Endbereich des ersten vorderen Koppelarms
- 26: zweiter vorderer Koppelarm
- 26a: erster Endbereich des zweiten vorderen Koppelarms
- 26b: zweiter Endbereich des zweiten vorderen Koppelarms
- 28: erster hinterer Koppelarm
- 28a: erster Endbereich des ersten hinteren Koppelarms
- 28b: zweiter Endbereich des ersten hinteren Koppelarms
- 30: zweiter hinterer Koppelarm
- 30a: erster Endbereich des zweiten hinteren Koppelarms
- 30b: zweiter Endbereich des zweiten hinteren Koppelarms
- 32: vordere Strebe
- 34: hintere Strebe

## Patentansprüche

1. Verstelleinheit (10) für eine verstellbare Radaufhängung eines Kraftfahrzeugs, umfassend mindestens einen Lenker (12), der mittels eines Lenkerlagerpunktes (14) an einem fahrzeugfesten Hilfsrahmen (16) festgelegt ist, wobei der Lenkerlagerpunkt (14) verschiebbar ausgebildet ist und in Wirkverbindung mit einem am Hilfsrahmen (16) gelagerten, eine Geradführung nach dem Prinzip der Kreisrollung ausführenden Koppelsystems (18) steht, wobei das Koppelsystems (18) mit einem Aktuator (20) in Wirkverbindung steht, sodass bei einer durch den Aktuator (20) initiierten Bewegung des Koppelsystems (18) der Lenkerlagerpunkt (14) entlang eines vorgegebenen Verstellweges linear verschiebbar ist, **dadurch gekennzeichnet, dass** der Aktuator (20) oberhalb des Lenkers (12) angeordnet und pendelnd am Hilfsrahmen (16) gelagert ist.

2. Verstelleinheit für eine verstellbare Radaufhängung nach Anspruch 1, **dadurch gekennzeichnet, dass** das Koppelsystem (18) mindestens zwei kreuzförmig zueinander angeordnete, jeweils erste und zweite Endbereiche (24a, 26a, 28a, 30a; 24b, 26b, 28b, 30b) aufweisende Koppelarme (24, 26, 28, 30) umfasst, deren erste Endbereiche (24a, 26a, 28a, 30a) jeweils drehbar am Hilfsrahmen (16) gelagert sind und deren zweite Endbereiche (24b, 26b, 28b, 30b) jeweils über eine mit dem Lenkerlagerpunkt (14) in Wirkverbindung stehenden Strebe (32, 34) gelenkig miteinander verbunden sind.

3. Verstelleinheit für eine verstellbare Radaufhängung nach Anspruch 1 oder 2, **dadurch gekennzeichnet, dass** der Aktuator (20) an seinem dem Koppelsystem (18) zugewandten Endbereich einen gabelförmigen Abschnitts (22) aufweist und über diesen gabelförmigen Abschnitt (22) mit dem Koppelsystem (18) in Wirkverbindung steht.

4. Verstelleinheit für eine verstellbare Radaufhängung nach einem der Ansprüche 1 bis 3, **dadurch gekennzeichnet, dass** der Aktuator (20) als ein in etwa in Längsrichtung des Lenkers (12) wirkender Linearsteller ausgebildet ist.

## Claims

1. Position adjustment unit (10) for an adjustable wheel suspension of a motor vehicle, comprising at least one strut (12) which is fixed by means of a strut bearing point (14) to a subframe (16) which is fixed with respect to the vehicle, with the strut bearing point (14) being movable and operatively connected to a coupling system (18) which is mounted on the subframe (16) and which performs the function of a rectilinear guide according to the principle of circle rolling, with the coupling system (18) being operatively connected to an actuator (20) such that, during a movement of the coupling system (18) initiated by the actuator (20), the strut bearing point (14) can be moved linearly along a predefined adjustment path, **characterized in that** the actuator (20) is arranged above the strut (12) and is mounted in pendular fashion on the subframe (16).

2. Position adjustment unit for an adjustable wheel suspension according to Claim 1, **characterized in that** the coupling system (18) has at least two coupling arms (24, 26, 28, 30) which are arranged in crossed formation with respect to one another and which have in each case first and second end regions (24a, 26a, 28a, 30a; 24b, 26b, 28b, 30b), the first end regions (24a, 26a, 28a, 30a) of which coupling arms (24, 26, 28, 30) are in each case rotatably mounted on the subframe (16) and the second end regions (24b, 26b, 28b, 30b) of which coupling arms (24, 26, 28, 30) are in each case articulatedly connected to one another by means of a bar (32, 24) which is operatively connected to the link bearing point (14).

3. Position adjustment unit for an adjustable wheel suspension according to Claim 1 or 2, **characterized in that** the actuator (20) has a fork-shaped portion (22) at its end region facing towards the coupling system (18), and is operatively connected by means of said fork-shaped portion (22) to the coupling system (18).

4. Position adjustment unit for an adjustable wheel suspension according to one of Claims 1 to 3, **characterized in that** the actuator (20) is embodied as a linear actuator which acts approximately in the longitudinal direction of the strut (12).

## Revendications

1. Unité de réglage (10) pour une suspension de roue réglable d'un véhicule automobile, comprenant au moins un bras oscillant (12) qui est fixé au moyen d'un point de palier de bras oscillant (14) sur un cadre auxiliaire (16) fixé au véhicule, le point de palier de bras oscillant (14) étant réalisé de manière déplaçable et étant en liaison fonctionnelle avec un système d'accouplement (18) monté sur le cadre auxiliaire (16) et effectuant un guidage rectiligne selon le principe du roulement le long d'un cercle, le système d'accouplement (18) étant en liaison fonctionnelle avec un actionneur (20), de sorte que dans le cas d'un mouvement du système d'accouplement (18), amorcé par l'actionneur (20), le point de palier de bras oscillant (14) puisse être déplacé linéairement le long d'une course de réglage prédéfinie, **caractérisée en ce que** l'actionneur (20) est disposé au-dessus du bras oscillant (12) et est monté de manière à osciller sur le cadre auxiliaire (16).

2. Unité de réglage pour une suspension de roue réglable selon la revendication 1, **caractérisée en ce que** le système d'accouplement (18) comprend au moins deux bras d'accouplement (24, 26, 28, 30) disposés en croix l'un par rapport à l'autre et présentant à chaque fois des premières et deuxièmes régions d'extrémité (24a, 26a, 28a, 30a ; 24b, 26b, 28b, 30b), dont les premières régions d'extrémité (24a, 26a, 28a, 30a) sont montées à chaque fois de manière rotative sur le cadre auxiliaire (16), et dont les deuxièmes régions d'extrémité (24b, 26b, 28b, 30b) sont connectées de manière articulée l'une à l'autre à chaque fois par le biais d'un montant (32, 34) en liaison fonctionnelle avec le point de palier de bras oscillant (14).

3. Unité de réglage pour une suspension de roue réglable selon la revendication 1 ou 2, **caractérisée en ce que** l'actionneur (20) présente, sur sa région d'extrémité tournée vers le système d'accouplement (18) une portion en forme de fourche (22) et est en liaison fonctionnelle avec le système d'accouplement (18) par le biais de cette portion en forme de fourche (22).

4. Unité de réglage pour une suspension de roue réglable selon l'une quelconque des revendications 1 à 3, **caractérisée en ce que** l'actionneur (20) est réalisé sous forme d'un actionneur linéaire agissant approximativement dans la direction longitudinale du bras oscillant (12).
